# EUROPÄISCHE PATENTANMELDUNG

(11) **EP 2 338 733 A1**
(43) Veröffentlichungstag der Anmeldung: **29.06.2011**
(21) Anmeldenummer: 10015221.4
(22) Anmeldetag: 02.12.2010
(51) Int. Cl.: B60Q 1/52

(54) **Verfahren und Fahrerassistenzeinrichtung zum Ausgeben eines Warnsignals in einem Kraftfahrzeug**

(30) Priorität: 16.12.2009 DE 102009058528
(71) Anmelder: Valeo Schalter und Sensoren GmbH, 74321 Bietigheim-Bissingen (DE)
(72) Erfinder: Geiger, Tobias, 74321 Bietigheim- Bissingen (DE); Vovkushevsky, Vsevolod, 74321 Bietigheim- Bissingen (DE); Heimberger, Marco, 74321 Bietigheim- Bissingen (DE)

(57) **Zusammenfassung**

Die Erfindung betrifft Verfahren zum Ausgeben eines Warnsignals durch eine Fahrerassistenzeinrichtung (2) in einem Kraftfahrzeug (1), wobei durch das Warnsignal ein Fahrer des Kraftfahrzeugs (1) in einer kollisionsnahen Situation, in welcher eine Kollision zwischen dem Kraftfahrzeug (1) und einem fahrzeugexternen Objekt (11, 17, 18, 19, 20, 21, 22) einzutreten droht, gewarnt wird. Es wird ein Abstand (12) des Objektes (11, 17, 18, 19, 20, 21, 22) zu dem Kraftfahrzeug (1) durch eine Sensoreinrichtung (3) der Fahrerassistenzeinrichtung (2) erfasst, und das Warnsignal wird nach Erfülltsein eines auf den erfassten Abstand (12) bezogenen vorgegebenen Kriteriums ausgegeben. Es wird ein zeitlicher Verlauf des Abstands (12) des Objektes (11, 17, 18, 19, 20, 21, 22) zu dem Kraftfahrzeug (1) erfasst, und beim Prüfen des Erfülltseins des vorgegebenen Kriteriums wird der Verlauf des Abstands (12) über einem vorbestimmten Zeitintervall berücksichtigt.

## Beschreibung

Die Erfindung betrifft ein Verfahren zum Ausgeben eines Warnsignals durch eine Fahrerassistenzeinrichtung in einem Kraftfahrzeug, wobei durch das Warnsignal ein Fahrer des Kraftfahrzeugs in einer kollisionsnahen Situation, in welcher eine Kollision zwischen dem Kraftfahrzeug und einem fahrzeugexternen Objekt einzutreten droht, gewarnt wird. Es wird ein Abstand des Objektes zu dem Kraftfahrzeug durch eine Sensoreinrichtung der Fahrerassistenzeinrichtung erfasst, und es wird das Warnsignal dann ausgegeben, wenn ein auf den erfassten Abstand bezogenes vorgegebenes Kriterium erfüllt ist. Die Erfindung betrifft außerdem eine Fahrerassistenzeinrichtung für ein Kraftfahrzeug, wie auch ein Kraftfahrzeug mit einer Fahrerassistenzeinrichtung.

Es geht vorliegend um so genannte Kollisionswarnungssysteme, durch welche ein Fahrer eines Kraftfahrzeugs dann gewarnt wird, wenn eine Kollision zwischen dem Kraftfahrzeug und einem fahrzeugexternen Objekt bevorsteht. Ein solches System wird beispielsweise in der Druckschrift DE 198 43 564 A1 beschrieben. Es wird eine Kollisionsgefahr des Kraftfahrzeugs mit einem fahrzeugexternen Objekt anhand eines abgeschätzten Abstands sowie anhand der aktuellen Geschwindigkeit des Kraftfahrzeugs eingeschätzt. Das Warnsignal wird dann ausgegeben, wenn der abgeschätzte momentane Abstand kleiner als ein vorgegebener Grenzwert ist und die Einschätzung das Vorhandensein einer Kollisionsgefahr ergibt. Für die Einschätzung der Kollisionsgefahr wird eine Zeit ermittelt, die das Kraftfahrzeug benötigt, um das Objekt zu erreichen (auch unter der Bezeichnung ,,time to collision" bekannt). Anhand dieser ermittelten Zeit wird dann die Gefahr einer Kollision des Fahrzeugs mit dem Objekt eingeschätzt. Es werden dabei lediglich die jeweils aktuellen momentanen Werte dieser Zeit berücksichtigt; die Gefahr wird als gegeben angesehen, wenn diese Zeit kleiner als ein Schwellwert ist.

Im Gegenstand gemäß Druckschrift EP 1 447 271 A3 wird ein Entfernungssensor an einer Seitenflanke eines Kraftfahrzeugs zur Überwachung von seitlichen Hindernissen eingesetzt. Das Kraftfahrzeug umfasst außerdem einen Wegsensor, mit welchem eine durch das Kraftfahrzeug zurückgelegte Wegstrecke erfasst werden kann. Die jeweils augenblickliche Position eines durch den Entfernungssensor einmal erfassten Hindernisses kann abhängig von der zurückgelegten Wegstrecke des Kraftfahrzeugs ausgerechnet werden. Die jeweils augenblickliche Position des Hindernisses relativ zum Kraftfahrzeug kann also auch dann berechnet werden, wenn sich das Hindernis nicht mehr im Erfassungsbereich des Entfernungssensors befindet. Es wird außerdem eine Kollisionsgefahr auf der Basis von Entfernungs-, Lenkwinkel- und Weginformationen fortlaufend ermittelt.

Aus dem Dokument EP 1 571 638 B1 ist bekannt, abhängig von einem aktuell eingestellten Lenkwinkel eines Kraftfahrzeugs die Fahrbahn des Kraftfahrzeugs vorauszusagen. Anhand der vorausgesagten Fahrbahn wird überprüft, ob eine Kollision des Kraftfahrzeugs mit fahrzeugexternen Objekten droht oder nicht. Wird erkannt, dass sich ein Objekt in einem sehr kleinen Abstand von der vorausgesagten Fahrbahn befindet, so wird ein Warnsignal ausgegeben.

Wird ein Warnsignal zu jedem Objekt ausgegeben, welches sich nah genug an einem Kraftfahrzeug oder auch seiner vorhergesagten Trajektorie befindet, so wird der Fahrer dauernd gewarnt. Ein zu oft ausgegebenes Warnsignal kann für den Fahrer störend sein, und der Fahrer kann sich nicht auf die eigentliche Verkehrssituation konzentrieren. Gerade dieser Umstand ist im Stand der Technik als nachteilig anzusehen. Insbesondere bei solchen Kollisionswarnungssystemen, bei denen lediglich der momentane Abstandswert zwischen dem Kraftfahrzeug und dem Objekt bei der Ausgabe des Warnsignals berücksichtigt wird, kann es zu ungewollten Störsituationen kommen. Dieses Problem besteht insbesondere bei statischen Fahrerassistenzsystemen, die lediglich den Abstand zwischen dem Objekt und dem Kraftfahrzeug, nicht jedoch die relative Geschwindigkeit erfassen können. Dies ist beispielsweise bei Ultraschallsensoren der Fall.

Es ist Aufgabe der Erfindung, eine Lösung aufzuzeigen, wie ein Fahrer eines Kraftfahrzeugs in kollisionsnahen Situationen besonders zuverlässig und bedarfsgerecht gewarnt werden kann.

Diese Aufgabe wird erfindungsgemäß durch ein Verfahren mit den Merkmalen gemäß Patentanspruch 1 sowie durch eine Fahrerassistenzeinrichtung mit den Merkmalen gemäß Patentanspruch 14, wie auch durch ein Kraftfahrzeug mit den Merkmalen gemäß Patentanspruch 15 gelöst. Vorteilhafte Ausgestaltungen der Erfindung sind Gegenstand der abhängigen Patentansprüche und der Beschreibung.

Ein erfindungsgemäßes Verfahren ist zum Ausgeben eines Warnsignals durch eine Fahrerassistenzeinrichtung in einem Kraftfahrzeug ausgelegt. Durch das Warnsignal wird ein Fahrer des Kraftfahrzeugs in einer kollisionsnahen Situation gewarnt, in welcher eine Kollision zwischen dem Kraftfahrzeug und einem fahrzeugexternen Objekt einzutreten droht. Es wird ein Abstand des Objektes zu dem Kraftfahrzeug durch eine Sensoreinrichtung der Fahrerassistenzeinrichtung erfasst. Das Warnsignal wird nach Erfülltsein eines auf den erfassten Abstand (als physikalische Größe) bezogenen vorgegebenen Kriteriums ausgegeben. Ein wesentlicher Grundgedanke besteht darin, dass ein zeitlicher Verlauf des Abstands des Objektes zu dem Kraftfahrzeug erfasst wird und beim Prüfen des Erfülltseins des vorgegebenen Kriteriums der Verlauf des Abstands über einem vorbestimmten Zeitintervall berücksichtigt wird.

Mit anderen Worten ist erfindungsgemäß vorgesehen, dass für ein vorbestimmtes Zeitintervall eine Mehrzahl von Messwerten des Abstands erfasst und beispielsweise gespeichert werden und dahingehend ausgewertet werden, ob eine kritische Situation gegeben ist oder nicht bzw. ob das Warnsignal ausgegeben werden soll oder nicht. Es wird somit erfindungsgemäß nicht nur ein einzelner Messwert des Abstands zwischen dem Kraftfahrzeug und dem fahrzeugexternen Objekt für die Überprüfung des vorgegebenen Kriteriums herangezogen, sondern im Gegensatz zum Stand der Technik ein zeitlicher Verlauf des Abstands. Auf diesem Wege gelingt es, die Entscheidung, ob das Warnsignal ausgegeben wird, nicht nur abhängig von der jeweils momentanen, augenblicklichen Situation, sondern abhängig von der Tendenz über etwas längere Zeit zu treffen. Eine solche Vorgehensweise führt zu einem im Vergleich zum Stand der Technik insgesamt stabileren Ergebnis. Der Fahrer wird durch das Warnsignal somit nur dann gewarnt, wenn dies tatsächlich erforderlich ist bzw. wenn eine Kollisionssituation tatsächlich bevorsteht. Insbesondere wird der Fahrer bei solchen Situationen nicht gewarnt, wenn zwar der momentane Abstandswert zwischen dem Kraftfahrzeug und einem fahrzeugexternen Objekt relativ klein ist, anhand des Verlaufs des Abstands jedoch keine Kollision zwischen dem Objekt und dem Kraftfahrzeug zu erwarten ist. Es wird somit insgesamt ein bedarfsgerechtes Warnverfahren geschaffen.

Bei dem Verfahren wird der Abstand zwischen dem Objekt und dem Kraftfahrzeug bevorzugt mit Hilfe eines Ultraschallsensors der Sensoreinrichtung erfasst. Wie bereits ausgeführt, erfasst ein Ultraschallsensor den Abstand, jedoch nicht die relative Geschwindigkeit zwischen dem Objekt und dem Kraftfahrzeug. Die Vorteile des erfindungsgemäßen Verfahrens kommen also insbesondere bei einem Ultraschallsensor vollständig zum Tragen. Der Ultraschallsensor liefert einzelne Messwerte des Abstands zwischen dem Kraftfahrzeug und dem Objekt, und die Fahrerassistenzeinrichtung erfasst aus jeweils einer Vielzahl von Messwerten den Verlauf des Abstands über dem vorbestimmten Zeitintervall.

Bei Einsatz eines Ultraschallsensors wird also in der Regel angenommen, dass die Umgebung des Fahrzeugs statisch ist, dass heißt, dass sich lediglich das Kraftfahrzeug, nicht jedoch die in der Umgebung befindlichen Objekte bewegt. Würde man nun - wie im Gegenstand gemäß Druckschrift DE 198 43 564 A1 - lediglich die Zeit betrachten, die das Kraftfahrzeug benötigt, um das Objekt zu erreichen (time to collision), so könnte es zu solchen Situationen kommen, bei denen das Warnsignal auf Grund einer solchen kritischen Zeit (time to collision) ausgegeben wird, obwohl keine Kollision zwischen dem Kraftfahrzeug und dem Objekt einzutreten droht. Der Abstand zwischen dem Kraftfahrzeug und dem Objekt, wie auch die momentane Geschwindigkeit des Kraftfahrzeugs mögen nämlich entsprechend relativ gering respektive relativ hoch sein, der Abstand zwischen dem Objekt und dem Kraftfahrzeug kann jedoch konstant bleiben, so dass kein Warnsignal erforderlich ist. Dies kann anhand des Verlaufs des Abstands über einem vorbestimmten Zeitintervall erkannt werden.

Also wird das Warnsignal nach Erfülltsein des auf den Verlauf des Abstands bezogenen, vorbestimmten Kriteriums ausgegeben. Dieses Kriterium kann beinhalten, dass der Abstand innerhalb des vorbestimmten Zeitintervalls abfällt. Dies kann z.B. derart aussehen, dass das Warnsignal dann ausgegeben wird, wenn einerseits der momentane Abstandswert relativ klein ist und andererseits der Abstand innerhalb des vorbestimmten Zeitintervalls zumindest zeitweise oder während des gesamten vorbestimmten Zeitintervalls abfällt. Hier kann gegebenenfalls ein Toleranzbereich vorgesehen sein, das heißt, das vorbestimmte Kriterium kann dann erfüllt sein, wenn der Abstand innerhalb des vorbestimmten Zeitintervalls mit einer vorgegebenen Toleranz bzw. Genauigkeit sinkt. Diese Toleranz kann beispielsweise in einem Wertebereich von 0 bis 10 mm liegen. Diese Ausführungsform hat den Vorteil, dass die Ausgabe des Warnsignals dann unterdrückt wird bzw. das Warnsignal dann nicht ausgegeben wird, wenn der Verlauf des Abstands - selbst bei einem relativ geringen momentanen Abstandswert - mit einer vorgegebenen Toleranz konstant bleibt oder ansteigt. In einem solchen Fall kann es nämlich zu einer Kollision zwischen dem Kraftfahrzeug und dem Objekt nicht kommen, und der Fahrer wird nicht durch das Warnsignal unnötig gestört. Der Fahrer kann sich also auf die eigentliche Straßensituation konzentrieren, nämlich beispielsweise auf einen Parkvorgang oder auf die Verkehrssituation auf einer Autobahn.

Ergänzend kann beim Prüfen des Erfülltseins des vorgegebenen Kriteriums auch der jeweils momentane Wert des Abstands zwischen dem Kraftfahrzeug und dem Objekt berücksichtigt werden. Das Warnsignal wird nämlich bevorzugt nur dann ausgegeben, wenn der momentane Wert des Abstands kleiner als ein vorgegebener erster Grenzwert ist. Bei einer Verwirklichung dieser Ausführungsform kann das Warnsignal dann ausgegeben werden, wenn einerseits der momentane Wert des Abstands kleiner als der erste Grenzwert ist und andererseits der Abstand innerhalb des vorbestimmten Zeitintervalls abfällt. Auf diese Weise kann nämlich eine kollisionsnahe Situation erkannt werden, und der Fahrer kann rechtzeitig gewarnt werden. Es kann auch vorgesehen sein, dass mehrere, z.B. zwei Grenzwerte für den momentanen Abstand vorgegeben sind. Dann kann lediglich ein optisches Warnsignal dann ausgegeben werden, wenn der momentane Abstandswert kleiner als der größerer der Grenzwerte ist und der Abstand innerhalb des vorbestimmten Zeitintervalls abfällt. Sowohl ein akustisches als auch ein optisches Signal kann beispielsweise dann ausgegeben werden, wenn der momentane Abstandswert kleiner als der kleinere der Grenzwerte ist und der Abstand zwischen dem Objekt und dem Kraftfahrzeug innerhalb des vorbestimmten Zeitintervalls abfällt.

Beim Prüfen des Erfülltseins des vorgegebenen Kriteriums wird der Verlauf des Abstands über einem vorbestimmten Zeitintervall berücksichtigt. Dieses Zeitintervall kann beispielsweise ein Zeitintervall aus einem Wertebereich von 0,1 s bis 0,5 s sein. Dann kann nämlich sehr schnell und bedarfsgerecht eine Aussage darüber getroffen werden, ob eine kollisionsnahe Situation gegeben ist oder nicht. Ist eine kollisionsnahe Situation gegeben, so wird der Fahrer durch die Fahrerassistenzeinrichtung rasch gewarnt, nämlich durch Ausgabe des Warnsignals.

Der Verlauf des Abstands kann dynamisch ausgewertet werden. Dies bedeutet, dass beim Prüfen des Erfülltseins des vorgegebenen Kriteriums der Verlauf des Abstands fortlaufend jeweils über dem vorbestimmten Zeitintervall ausgewertet wird. Auf diesem Wege gelingt es, die jeweils augenblickliche Straßensituation fortlaufend bzw. kontinuierlich zu überwachen und gegebenenfalls das Warnsignal bedarfsgerecht auszugeben.

Die Fahrerassistenzeinrichtung kann eine Änderung des Abstands pro Zeiteinheit, insbesondere eine Verringerung des Abstands pro Zeiteinheit, erfassen bzw. ermitteln. Dann kann beim Prüfen des Erfülltseins des vorgegebenen Kriteriums zusätzlich auch die Änderung, insbesondere die Verringerung, des Abstands pro Zeiteinheit berücksichtigt werden. Auf diese Art und Weise wird eine situationsabhängige Ausgabe des Warnsignals ermöglicht. Es gelingt nämlich, abhängig von der Auswertung der Änderung des Abstands pro Zeiteinheit eine Tendenz der Bewegung des Kraftfahrzeugs in Bezug auf das Objekt festzustellen. So können kritische Situationen vorhergesagt werden; es kann erkannt werden, ob eine Kollision bevorsteht oder nicht. Es hat sich dabei als besonders vorteilhaft herausgestellt, wenn das Kriterium beinhaltet, dass die Verringerung des Abstands pro Zeiteinheit eine vorgegebenen Schwelle überschreitet. Diese Schwelle kann auch von dem momentanen Wert des Abstands des Objektes zu dem Kraftfahrzeug abhängig sein. Hierdurch wird erreicht, dass die Ausgabe des Warnsignals dann unterdrückt wird, wenn die Verringerung des Abstands pro Zeiteinheit zwar relativ hoch ist, der momentane Abstandswert jedoch ebenfalls ausreichend groß ist. Darüber hinaus kann das Warnsignal dann vorzeitig - das heißt bereits bei einem mittleren Abstand - ausgegeben werden, wenn die Verringerung des Abstands pro Zeiteinheit sehr groß ist, das heißt wenn sich das Kraftfahrzeug dem Objekt sehr schnell annähert.

In einer Ausführungsform wird in Abhängigkeit von einem momentanen Lenkwinkel des Kraftfahrzeuges eine Trajektorie des Kraftfahrzeugs vorausgesagt, und beim Prüfen des Erfülltseins des vorgegebenen Kriteriums wird zusätzlich ein Abstand des Objektes zu der vorausgesagten Trajektorie berücksichtigt. Eine Information über den aktuellen Wert des Lenkwinkels kann beispielsweise durch einen Lenkwinkelsensor bereitgestellt werden. Durch das Vorausbestimmen der Trajektorie kann erkannt werden, ob das Kraftfahrzeug auf seiner zu erwartenden Bewegungstrajektorie mit dem erkannten Objekt kollidieren wird oder nicht. Wird festgestellt, dass das Kraftfahrzeug auf der vorausgesagten Trajektorie mit dem Objekt kollidiert oder sehr knapp an dem Objekt vorbeifahren wird, so kann das Warnsignal ausgegeben werden. Der Vorteil dieser Ausführungsform besteht darin, dass der Fahrer dann nicht durch das Warnsignal gestört wird, wenn durch die zu erwartende Fahrzeugbewegung das Objekt in einem großen Abstand umfahren wird, obwohl der aktuelle Abstandswert zu diesem Objekt relativ klein ist.

Das vorgegebene Kriterium kann weiterhin beinhalten, dass der Abstand des Objektes zu der Trajektorie kleiner als ein vorgegebener zweiter Grenzwert ist. Wird also erkannt, dass sich ein Objekt in einem solchen Abstand von der vorausgesagten Trajektorie befindet, welcher kleiner als der zweite Grenzwert ist, und ist das Kriterium bezüglich des Verlaufs des Abstands erfüllt, so kann das Warnsignal ausgegeben werden. Auch hier können mehrere, beispielsweise zwei Grenzwerte gegeben sein. Bei Unterschreitung des größeren dieser Grenzwerte kann lediglich ein optisches Warnsignal - beispielsweise mit Hilfe einer optischen Anzeigeeinrichtung - ausgegeben werden; bei Unterschreiten eines kleineren der Grenzwerte kann ein akustisches Warnsignal oder sowohl ein akustisches Warnsignal als auch ein optisches Warnsignal ausgegeben werden.

Es hat sich als besonders vorteilhaft erwiesen, wenn ein Öffnen einer Tür des Kraftfahrzeugs oder ein Bevorstehen des Öffnens der Tür durch die Fahrerassistenzeinrichtung erkannt wird und nach Erkennen des Öffnens oder des Bevorstehens des Öffnens der Tür das vorgegebene Kriterium verändert wird. Wird eine Tür des Kraftfahrzeugs geöffnet, so ändert sich auch die äußere Form desselben Kraftfahrzeugs. Es kann somit vorkommen, dass bei geschlossenen Türen des Kraftfahrzeugs keine Kollision mit dem Objekt droht, während bei einer offenen Tür die Kollision gegeben ist. Dies kann z.B. so aussehen, dass ein Grenzwert für den momentanen Abstand zwischen dem Kraftfahrzeug und dem Objekt dann verändert wird, wenn eine Tür des Kraftfahrzeugs geöffnet wird oder das Öffnen der Tür bevorsteht. Es können somit Kollisionen mit dem Objekt auch bei geöffneter Tür des Kraftfahrzeugs wie auch bei dem Vorgang des Öffnens der Tür vermieden werden. Zur Erkennung des Öffnens oder des Bevorstehens des Öffnens der Tür kann beispielsweise der Zustand der Gurtschlösser für die besetzten Sitze des Kraftfahrzeugs geprüft werden. Wird das Bevorstehen des Öffnens der Tür auf diesem Wege erkannt, so müssen keine zusätzlichen Sensoren in die Struktur der Tür eingebaut werden, welche die optische Ausgestaltung der Tür - im Falle von z.B. Ultraschallsensoren - stark beeinträchtigten würden.

Eine erfindungsgemäße Fahrerassistenzeinrichtung ist zum Ausgeben eines Warnsignals in einem Kraftfahrzeug ausgebildet, wobei das Warnsignal zum Warnen eines Fahrers des Kraftfahrzeugs in einer kollisionsnahen Situation ausgelegt ist, in welcher eine Kollision zwischen dem Kraftfahrzeug und einem Objekt einzutreten droht. Die Fahrerassistenzeinrichtung umfasst eine Sensoreinrichtung zum Erfassen eines Abstands des Objektes zu dem Kraftfahrzeug, wie auch eine Ausgabeeinrichtung zum Ausgeben des Warnsignals nach Erfülltsein eines auf den erfassten Abstand bezogenen vorgegebenen Kriteriums. Die Ausgabeeinrichtung ist zum Erfassen eines zeitlichen Verlaufs des Abstands des Objektes zu dem Kraftfahrzeug und beim Prüfen des Erfülltseins des vorgegebenen Kriteriums zum Berücksichtigen des Verlaufs des Abstands über einem vorbestimmten Zeitintervall ausgebildet.

Ein erfindungsgemäßes Kraftfahrzeug, insbesondere ein Personenkraftwagen, umfasst eine erfindungsgemäße Fahrerassistenzeinrichtung.

Die mit Bezug auf das erfindungsgemäße Verfahren vorgestellten bevorzugten Ausführungsformen und deren Vorteile gelten entsprechende für die erfindungsgemäße Fahrerassistenzeinrichtung, wie auch für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung ein Kraftfahrzeug gemäß einer Ausführungsform der Erfindung;
- Fig. 2: in schematischer Darstellung eine Draufsicht auf eine Straßensituation, wobei ein Verfahren gemäß einer Ausführungsform der Erfindung näher erläutert wird; und
- Fig. 3 bis 5: in schematischer Darstellung jeweils eine Straßensituation, wobei jeweils ein Verfahren gemäß einer Ausführungsform der Erfindung näher erläutert wird.

In den Fig. werden gleiche und funktionsgleiche Elemente mit den gleichen Bezugszeichen versehen.

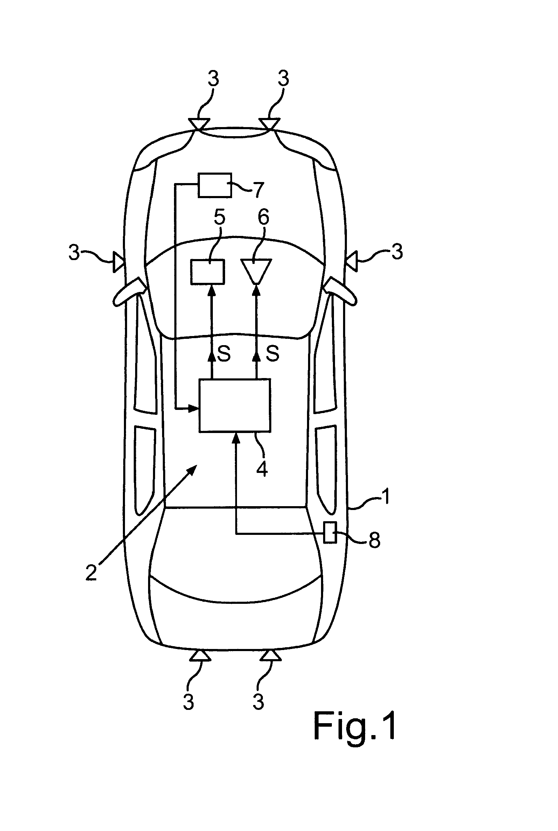

Ein Kraftfahrzeug 1, wie es in Fig. 1 dargestellt ist, ist ein Personenkraftwagen. Das Kraftfahrzeug 1 umfasst eine Fahrerassistenzeinrichtung 2, welche zum Unterstützen eines Fahrers beim Führen des Kraftfahrzeugs 1 dient. Die Fahrerassistenzeinrichtung 2 umfasst im Ausführungsbeispiel eine Vielzahl von Ultraschallsensoren 3, die insgesamt eine Sensoreinrichtung der Fahrerassistenzeinrichtung 2 bilden. Die Ultraschallsensoren 3 sind an einer äußeren Oberfläche des Kraftfahrzeugs 1 verteilt angeordnet. Die Anzahl sowie die Anordnung der Ultraschallsensoren 3 sind im Ausführungsbeispiel gemäß Fig. 1 lediglich beispielhaft. Im Ausführungsbeispiel sind zwei Ultraschallsensoren 3 an einem vorderen Stoßfänger des Kraftfahrzeugs 1 angeordnet; zwei Ultraschallsensoren 3 sind an einem hinteren Stoßfänger angeordnet; an einer linken Seitenflanken sowie an einer rechten Seitenflanken des Kraftfahrzeugs 1 ist jeweils ein Ultraschallsensor 3 angebracht, nämlich in einem vorderen Bereich des Kraftfahrzeugs 1 bezogen auf die Fahrzeuglängsrichtung.

Die Fahrerassistenzeinrichtung 2 umfasst außerdem eine Steuereinrichtung 4, die mit den Ultraschallsensoren 3 gekoppelt ist. Die Ultraschallsensoren 3 übermitteln Sensorsignale an die Steuereinrichtung 4. Die Steuereinrichtung 4 kann die Sensorsignale verarbeiten und abhängig von den Sensorsignalen beispielsweise einen Abstand eines fahrzeugexternen Objekts zum Kraftfahrzeug 1 bestimmen. Es ist auch möglich, anhand der Sensorsignale mehrerer Ultraschallsensoren 3 eine relative Position eines Objektes bzgl. des Kraftfahrzeugs 1 zu bestimmen.

Die Steuereinrichtung 4 steuert eine Anzeigeeinrichtung 5, wie auch einen Lautsprecher 6 an, die Ausgabeeinrichtungen sind. Die Anzeigeeinrichtung 5 kann beispielsweise ein Display und/oder einen Bildprojektor (Head-Up-Display) beinhalten. Die Steuereinrichtung 4 steuert die Anzeigeeinrichtung 5 sowie die Lautsprecher 6 unter Ausgabe entsprechender Steuersignale S.

Die Fahrerassistenzeinrichtung 2 dient insbesondere zum Warnen des Fahrers in kollisionsnahen Situationen. Die Fahrerassistenzeinrichtung 2 kann Warnsignale in Situationen ausgeben, in welchen eine Kollision zwischen dem Kraftfahrzeug 1 und einem fahrzeugexternen Objekt einzutreten droht. Die Warnsignale können mit Hilfe der Anzeigeeinrichtung 5, wie auch des Lautsprechers 6 ausgegeben werden. Im Falle der Anzeigeeinrichtung 5 werden optische Warnsignale ausgegeben, während der Lautsprecher 6 akustische Warnsignale ausgeben kann. Im Ausführungsbeispiel erfolgt die Ausgabe eines Warnsignals nach Erfülltsein eines vorbestimmten Kriteriums. Dieses Kriterium kann beispielsweise in Form von Daten in der Steuereinrichtung 2 abgelegt sein.

Beim Prüfen des Erfülltseins des vorgegebenen Kriteriums berücksichtig die Steuereinrichtung 2 beispielsweise folgende Parameter: einen momentanen Wert eines Abstands zwischen dem Objekt und dem Kraftfahrzeug 1, einen Verlauf des Abstands über einem vorgegebenen Zeitintervall, beispielsweise über einem Zeitintervall von 300 ms bis 500 ms, eine Verringerung des Abstands pro Zeiteinheit sowie einen momentanen Wert eines Abstands des Objektes zu einer vorausgesagten Trajektorie des Kraftfahrzeugs 1. Die zu erwartende Trajektorie des Kraftfahrzeugs 1 kann durch die Steuereinrichtung 2 abhängig von Lenksignalen eines Linkwinkelsensors 7 und somit abhängig von einem aktuellen Lenkwinkel des Kraftfahrzeugs 1 vorausgesagt werden.

Das oben genannte Kriterium, nach dessen Erfülltsein ein Warnsignal durch die Ausgabeeinrichtung 5, 6 ausgegeben wird, kann beispielsweise beinhalten,
- dass innerhalb des vorgegebenen Zeitintervalls der Abstand zwischen dem Objekt und dem Kraftfahrzeug 1 sinkt, nämlich mit einer gegebenen Toleranz bzw. Genauigkeit von beispielsweise 10 mm; und/oder
- dass der momentane Wert des Abstands zwischen dem Objekt und dem Kraftfahrzeug 1 einen vorgegebenen ersten Schwellwert, beispielsweise 2 m, unterschreitet; und/oder
- dass die Verringerung des Abstands zwischen dem Kraftfahrzeug 1 und dem Objekt pro Zeiteinheit eine vorgegebene Schwelle überschreitet, wobei diese Schwelle abhängig von dem momentanen Wert des Abstands ist; und/oder
- dass der momentane Wert des Abstands zwischen dem Objekt und der vorausbestimmten Trajektorie des Kraftfahrzeugs 1 einen vorgegebenen Grenzwert unterschreitet, beispielsweise 50 cm.

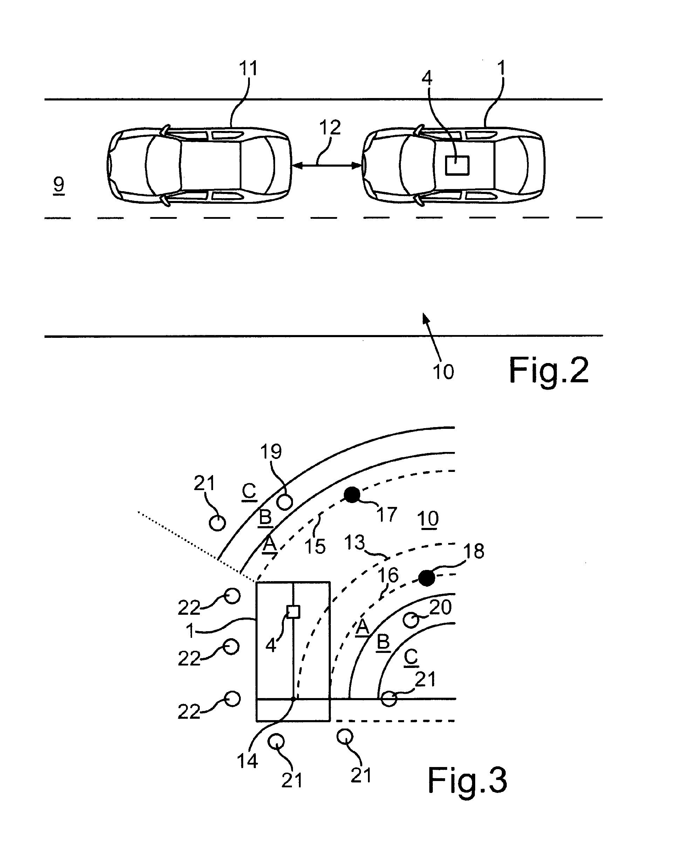

Im Einzelnen wird das oben genannte Kriterium unter Bezugnahme auf die Fig. 2 bis 5 näher erläutert, in denen verschiedenste Straßensituationen mit dem Kraftfahrzeug 1 gemäß Fig. 1 abgebildet sind. Zusätzlich kann die Steuereinrichtung 4 auch beim Prüfen des Erfülltseins des Kriteriums eine Geschwindigkeit des Kraftfahrzeugs 1 berücksichtigen. Entsprechende Signale kann die Steuereinrichtung 4 von einem Radsensor 8 erhalten.

In einem Szenario gemäß Fig. 2 befindet sich das Kraftfahrzeug 1 gemäß Fig. 1 auf einer rechten Spur 9 einer Straße 10, beispielsweise einer Autobahn. Das Kraftfahrzeug 1 ist mit der Fahrerassistenzeinrichtung - wie in Fig. 1 dargestellt - ausgerüstet. Vor dem Kraftfahrzeug 1 befindet sich ein weiteres Kraftfahrzeug 11, welches ebenfalls auf der rechten Spur 9 fährt. Die Kraftfahrzeuge 1, 11 fahren mit der gleichen Geschwindigkeit, beispielsweise jeweils 90 km/h. Somit ändert sich ein Abstand 12 zwischen den beiden Kraftfahrzeugen 1, 11 nicht. Im Ausführungsbeispiel ist der Abstand 12 relativ klein und beträgt beispielsweise 1 m. Im Stand der Technik, in welchem die Ausgabe eines Warnsignals lediglich abhängig von dem momentanen Abstand erfolgt, würde bereits ein Warnsignal ausgegeben werden. Die Steuereinrichtung 4 berücksichtigt jedoch beim Prüfen des Erfülltseins des obigen Kriteriums auch den Verlauf des Abstands 12, nämlich über dem oben genannten vorgegebenen Zeitintervall. Im Ausführungsbeispiel gemäß Fig. 2 erkennt die Steuereinrichtung 4 also, dass der Abstand 12 zwischen dem Kraftfahrzeug 1, 11 konstant verbleibt und somit der Fahrer des Kraftfahrzeugs 1 die Situation unter Kontrolle hat.

Die Steuereinrichtung 4 wertet den Verlauf des Abstands 12 über dem vorgegebenen Zeitintervall fortlaufend aus. Dies bedeutet, dass der Verlauf des Abstands 12 kontinuierlich ausgewertet wird, nämlich jeweils über dem vorgegebenen Zeitintervall. Erkennt die Steuereinrichtung 4, dass sich der Abstand 12 zwischen den Kraftfahrzeugen 1, 11 verringert und der momentane Wert des Abstands 12 kleiner als der vorgegebene erste Grenzwert ist, so wird ein Warnsignal ausgegeben. Dies kann beispielsweise so aussehen, dass zwei Grenzwerte für den momentanen Wert des Abstands 12 gegeben sind. Dann kann bei Unterschreiten des höheren Grenzwertes lediglich ein optisches Warnsignal mit Hilfe der Anzeigeeinrichtung 5 ausgegeben werden und bei Unterschreiten des geringeren Grenzwertes kann ergänzend oder alternativ ein akustisches Warnsignal mit Hilfe des Lautsprechers 6 ausgegeben werden.

Im Szenario gemäß Fig. 2 kann die Steuereinrichtung 4 auch die Verringerung des Abstands 12 pro Zeiteinheit berücksichtigen. Wie bereits ausgeführt, kann die Schwelle für die Verringerung pro Zeiteinheit abhängig von dem momentanen Wert des Abstands 12 variieren. Ist der momentane Wert des Abstands 12 relativ klein, so kann diese Schwelle für die Verringerung pro Zeiteinheit relativ gering sein. Ist der momentane Wert des Abstands 12 relativ groß, so kann die Schwelle für die Verringerung pro Zeiteinheit entsprechend größer sein. Auf diesem Wege können frühzeitig Warnsignale ausgegeben werden, so dass der Fahrer die Möglichkeit hat, entsprechende Maßnahmen zu treffen.

In Fig. 3 ist eine weitere Straßensituation schematisch abgebildet, nämlich mit dem Kraftfahrzeug 1 gemäß Fig. 1. Das Kraftfahrzeug 1 fährt auf einer Straße 10, nämlich durch eine Rechtskurve. Die Steuereinrichtung 4 berechnet eine Farbbahn 13, welche durch das Kraftfahrzeug 1 befahren wird. Die Trajektorie 13 berechnet die Steuereinrichtung 4 abhängig von dem momentanen Lenkwinkel voraus. Ändert sich der Lenkwinkel, so kann die Steuereinrichtung 4 die Trajektorie 13 neu berechnen. Für diese Änderung des Lenkwinkels kann ebenfalls ein Toleranzbereich gegeben sein. Die Trajektorie 13 berechnet die Steuereinrichtung 4 bzgl. eines Mittelpunkts 14 einer hinteren Achse des Kraftfahrzeugs 1. Die Trajektorie 13 beginnt also im Mittelpunkt 14 der hinteren Achse. Darüber hinaus berechnet die Steuereinrichtung 4 eine linke Trajektorie 15 der äußeren Konturpunkte der linken Seitenflanke des Kraftfahrzeugs 1, wie auch eine rechte Trajektorie 16 der äußeren Konturpunkte der rechten Seitenflanke des Kraftfahrzeugs 1.

Zu der vorausgesagten Trajektorie 13, der linken Trajektorie 15 und der rechten Trajektorie 16 definiert die Steuereinrichtung 4 drei Bereiche, nämlich einen Nahbereich A, einen mittleren Bereich B, wie auch einen Fernbereich C. Die Bereiche A, B, C definiert die Steuereinrichtung 4 abhängig von den berechneten Trajektorien 15, 16, wie auch abhängig von abgelegten Grenzwerten. Die Bereiche A, B, C werden sowohl bzgl. der linken Trajektorie 15, als auch bzgl. der rechten Trajektorie 16 definiert. Der Nahbereich A hat die Bedeutung, dass alle dort befindlichen Objekte eine Gefahr für das Kraftfahrzeug 1 darstellen. Bei den im Nahbereich A befindlichen Objekten besteht somit eine hohe Wahrscheinlichkeit einer Kollision. In dem mittleren Bereich B befindliche Objekte sind dagegen weniger gefährlich, so dass diesen Objekten eine andere Warnstufe zugeordnet werden kann. Im Fernbereich C befindliche Objekte stellen keine Gefahr für das Kraftfahrzeug 1 dar.

In dem in Fig. 3 dargestellten Ausführungsbeispiel befindet sich ein Objekt 17 in dem Nahbereich A bzgl. der linken Trajektorie 15; ein weiteres Objekt 18 befindet sich im Nahbereich A bzgl. der rechten Trajektorie 16. Dies erkennt entsprechend die Steuereinrichtung 4. Da sich das Kraftfahrzeug 1 entlang der Trajektorie 13 bewegt und somit eine Kollisionsgefahr bzgl. der Objekte 17, 18 droht, steuert die Steuereinrichtung 4 den Lautsprecher 6 und gegebenenfalls auch die Anzeigeeinrichtung 5 an. Es wird ein akustisches Warnsignal und gegebenenfalls ein optisches Warnsignal ausgegeben.

In dem weniger gefährdeten mittleren Bereich B befinden sich ebenfalls Objekte 19, 20. Zu diesen Objekten kann beispielsweise lediglich ein optisches Signal mit Hilfe der Anzeigeeinrichtung 5 ausgegeben werden. Diese Objekte 19, 20 kann der Fahrer dann durch die Anzeigeeinrichtung 5 erkennen und somit über die Objekte 19, 20 informiert werden.

In dem Fernbereich C, wie auch außerhalb der definierten Bereiche A, B, C befinden sich ebenfalls eine Vielzahl von Objekten 21, 22. Durch diese Objekte 21, 22 ist jedoch - solange sich das Kraftfahrzeug 1 entlang der vorausgesagten Trajektorie 13 beweget - keine Gefahr gegeben, so dass die Ausgabe eines Warnsignals unterdrückt werden kann.

Also werden mit anderen Worten im Ausführungsbeispiel gemäß Fig. 3 jeweils die Abstände zwischen den Objekten 17, 18, 19, 20, 21, 22 zu der vorausbestimmten Trajektorie 13 ausgewertet und abhängig von dieser Auswertung wird ein Warnsignal ausgegeben oder nicht. Auch hier berücksichtigt die Steuereinrichtung 4 die jeweiligen Verläufe der Abstände zwischen dem Kraftfahrzeug 1 und den Objekten 17, 18, 19, 20, 21, 22, wie auch gegebenenfalls analog die Verläufe der Abstände der Objekte zu der Trajektorie 13 und/oder den Trajektorien 15, 16. Die Warnsignale werden nur dann ausgegeben, wenn sich der Abstand entsprechend verringert.

Die Auswertung des Verlaufs des Abstands zwischen dem Kraftfahrzeug 1 und einem Objekt zeigt sich beispielsweise auch in einer Tiefgarage besonders vorteilhaft. In einer Tiefgarage sind die momentanen Abstände zwischen dem Kraftfahrzeug und anderen Objekten, wie Wänden, in der Regel relativ gering. Ein Warnsignal muss jedoch nicht unbedingt ausgegeben werden. Verringert sich der jeweilige (kleine) Abstand über der Zeit nicht, so wird der Fahrer durch ein dauerhaftes Warnsignal nicht gestört.

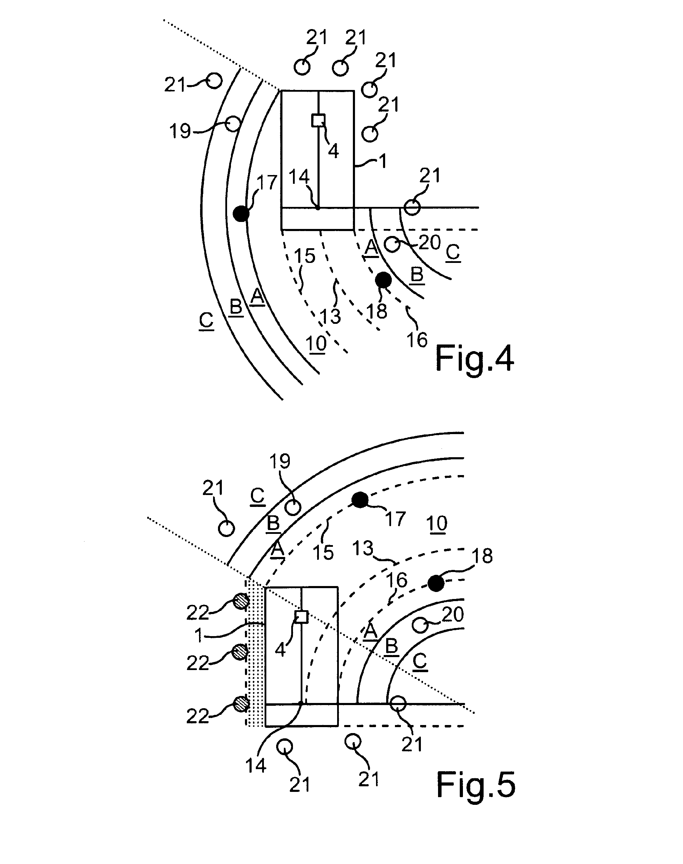

In Fig. 5 ist die gleiche Situation wie in Fig. 3 dargestellt, jedoch steht das Kraftfahrzeug 1 still. Die Steuereinrichtung 4 überprüft, ob ein Rückwärtsgang eingelegt oder ausgeschaltet ist. Ist der Rückwärtsgang ausgeschaltet, so überprüft die Steuereinrichtung 4, ob ein Öffnen einer Tür des Kraftfahrzeugs 1 erfolgt oder bevorsteht. Ob eine Tür des Kraftfahrzeugs 1 tatsächlich geöffnet wird, kann beispielsweise mit Hilfe eines entsprechenden Sensors festgestellt werden, welcher in die Struktur der Tür eingebaut ist. Die Steuereinrichtung 4 kann jedoch anhand von Gurtschloss-Sensorsignalen erkennen, ob das Öffnen einer Tür bevorsteht oder nicht. Die Steuereinrichtung 4 überprüft, ob die Gurtschlösser der belegten Sitze im Kraftfahrzeug 1 offen sind. Ist dies der Fall, so stellt die Steuereinrichtung 4 fest, dass das Öffnen einer Tür bevorsteht. In einem solchen Fall ändert die Steuereinrichtung 4 das oben genannte Kriterium für die Ausgabe eines Warnsignals. Und zwar werden nun diejenigen Objekte 22 bei der Ausgabe eines Warnsignals berücksichtigt, welche sich unmittelbar neben dem Kraftfahrzeug 1 befinden. Durch Öffnen einer Tür ist nämlich eine Kollisionsgefahr mit diesen Objekten 22 gegeben, wenngleich keine Kollisionsgefahr bei einer Vorwärtsfahrt des Kraftfahrzeugs 1 gegeben wäre. In Situationen, in denen es möglich ist, dass einer der Passagiere eine Tür des Kraftfahrzeugs 1 öffnet, wird ein Warnsignal trotz Kollisionsfreiheit auf der vorausgesagten Trajektorie 13 ausgegeben. Hier werden die tatsächlichen momentanen Abstände der Objekte 22 zu einer Seitenflanke des Kraftfahrzeugs 1 berücksichtigt.

Ähnlich wie im Szenario gemäß Fig. 3 berechnet die Steuereinrichtung 4 eine zu erwartende Trajektorie 13 des Kraftfahrzeugs 1 auch bei einer Rückwärtsfahrt. Ein solches Szenario ist in Fig. 4 dargestellt. Die Steuereinrichtung 4 erkennt anhand der Trajektorie 13 sowie der Trajektorien 15, 16, dass sich die Objekte 17, 18 jeweils in dem Nahbereich A befinden. Da eine Kollisionsgefahr durch diese Objekte 17, 18 gegeben ist, wird ein entsprechendes Warnsignal ausgegeben, beispielsweise ein akustisches Warnsignal mit Hilfe des Lautsprechers 6. Für diejenigen Objekte 19, 20, die sich in dem mittleren Bereich B befinden, wird vorzugsweise lediglich ein optisches Warnsignal ausgegeben, nämlich mit Hilfe der Anzeigeeinrichtung 5. Diejenigen Objekte 21, die sich in dem Fernbereich C oder außerdem der berechneten Bereiche A, B, C befinden, stellen keine Gefahr für das Kraftfahrzeug 1 dar. Deshalb wird für diese Objekte 21 kein Warnsignal ausgegeben.

## Patentansprüche

1. Verfahren zum Ausgeben eines Warnsignals durch eine Fahrerassistenzeinrichtung (2) in einem Kraftfahrzeug (1), wobei durch das Warnsignal ein Fahrer des Kraftfahrzeugs (1) in einer kollisionsnahen Situation, in welcher eine Kollision zwischen dem Kraftfahrzeug (1) und einem fahrzeugexternen Objekt (11, 17, 18, 19, 20, 21, 22) einzutreten droht, gewarnt wird, mit den Schritten:
- Erfassen eines Abstands (12) des Objektes (11, 17, 18, 19, 20, 21, 22) zu dem Kraftfahrzeug (1) durch eine Sensoreinrichtung (3) der Fahrerassistenzeinrichtung (2) und
- Ausgeben des Warnsignals nach Erfülltsein eines auf den erfassten Abstand (12) bezogenen vorgegebenen Kriteriums,
**dadurch gekennzeichnet, dass**
ein zeitlicher Verlauf des Abstands (12) des Objektes (11, 17, 18, 19, 20, 21, 22) zu dem Kraftfahrzeug (1) erfasst wird und beim Prüfen des Erfülltseins des vorgegebenen Kriteriums der Verlauf des Abstands (12) über einem vorbestimmten Zeitintervall berücksichtigt wird.

2. Verfahren nach Anspruch 1,
**dadurch gekennzeichnet, dass**
das vorgegebene Kriterium umfasst, dass der Abstand (12) innerhalb des vorbestimmten Zeitintervalls abfällt.

3. Verfahren nach Anspruch 1 oder 2,
**dadurch gekennzeichnet, dass**
das vorgegebene Kriterium umfasst, dass der momentane Wert des Abstands (12) kleiner als ein vorgegebener erster Grenzwert ist.

4. Verfahren nach einem der vorhergehenden Ansprüche,
**dadurch gekennzeichnet, dass**
beim Prüfen des Erfülltseins des vorgegebenen Kriteriums der Verlauf des Abstands (12) jeweils über einem Zeitintervall von 0,1 s bis 1 s, insbesondere über einem Zeitintervall von 0,2 s bis 0,5 s, berücksichtigt wird.

5. Verfahren nach einem der vorhergehenden Ansprüche,
**dadurch gekennzeichnet, dass**
beim Prüfen des Erfülltseins des vorgegebenen Kriteriums der Verlauf des Abstands (12) fortlaufend jeweils über dem vorbestimmten Zeitintervall ausgewertet wird.

6. Verfahren nach einem der vorhergehenden Ansprüche,
**dadurch gekennzeichnet, dass**
eine Verringerung des Abstands (12) pro Zeiteinheit erfasst wird und beim Prüfen des Erfülltseins des vorgegebenen Kriteriums zusätzlich die Verringerung des Abstands (12) pro Zeiteinheit berücksichtigt wird.

7. Verfahren nach Anspruch 6,
**dadurch gekennzeichnet, dass**
das Kriterium umfasst, dass die Verringerung des Abstands (12) pro Zeiteinheit eine vorgegebene Schwelle überschreitet.

8. Verfahren nach Anspruch 7,
**dadurch gekennzeichnet, dass**
die Schwelle von dem momentanen Wert des Abstands des Objektes (11, 17, 18, 19, 20, 21, 22) zu dem Kraftfahrzeug (1) abhängt.

9. Verfahren nach einem der vorhergehenden Ansprüche,
**dadurch gekennzeichnet, dass**
in Abhängigkeit von einem momentanen Lenkwinkel des Kraftfahrzeugs (1) eine Trajektorie (13, 15, 16) des Kraftfahrzeugs (1) vorausbestimmt wird und beim Prüfen des Erfülltseins des vorgegebenen Kriteriums zusätzlich ein Abstand des Objektes (11, 17, 18, 19, 20, 21, 22) zu der vorausbestimmten Trajektorie (13, 15, 16) berücksichtigt wird.

10. Verfahren nach Anspruch 9,
**dadurch gekennzeichnet, dass**
das vorgegebene Kriterium umfasst, dass der Abstand des Objektes (11, 17, 18, 19, 20, 21, 22) zu der Trajektorie (13, 15, 16) kleiner als ein vorgegebener zweiter Grenzwert ist.

11. Verfahren nach einem der vorhergehenden Ansprüche,
**dadurch gekennzeichnet, dass**
ein Öffnen einer Tür des Kraftfahrzeugs (1) oder ein Bevorstehen des Öffnens der Tür durch die Fahrerassistenzeinrichtung (2) erkannt wird und nach Erkennen des Öffnens oder des Bevorstehens des Öffnens der Tür das vorgegebene Kriterium verändert wird.

12. Verfahren nach einem der vorhergehenden Ansprüche,
**dadurch gekennzeichnet, dass**
die Sensoreinrichtung (3) zumindest einen Ultraschallsensor (3) umfasst, durch welchen der Abstand (12) erfasst wird.

13. Verfahren nach einem der vorhergehenden Ansprüche,
**dadurch gekennzeichnet, dass** das fahrzeugexterne Objekt (11, 17, 18, 19, 20, 21, 22) ein stationäre Objekt ist und insbesondere in einem Bereich seitlich neben dem Kraftfahrzeug (1) angeordnet ist.

14. Fahrerassistenzeinrichtung (2) zum Ausgeben eines Warnsignals in einem Kraftfahrzeug (1), wobei das Warnsignal zum Warnen eines Fahrers des Kraftfahrzeugs (1) in einer kollisionsnahen Situation ausgelegt ist, in welcher eine Kollision zwischen dem Kraftfahrzeug (1) und einem Objekt (11, 17, 18, 19, 20, 21, 22) einzutreten droht, mit:
- einer Sensoreinrichtung (3) zum Erfassen eines Abstands des Objektes (11, 17, 18, 19, 20, 21, 22) zu dem Kraftfahrzeug (1) und
- Steuereinrichtung (4) zum Veranlassen der Ausgabe des Warnsignals nach Erfülltsein eines auf den erfassten Abstand bezogenen vorgegebenen Kriteriums,
**dadurch gekennzeichnet, dass**
die Steuereinrichtung (4) zum Erfassen eines zeitlichen Verlaufs des Abstands (12) des Objektes (11, 17, 18, 19, 20, 21, 22) zu dem Kraftfahrzeug (1) und beim Prüfen des Erfülltseins des vorgegebenen Kriteriums zum Berücksichtigen des Verlaufs des Abstands (12) über einem vorbestimmten Zeitintervall ausgebildet ist.

15. Kraftfahrzeug (1) mit einer Fahrerassistenzeinrichtung (2) nach Anspruch 14.
